(19) Europäisches Patentamt
European Patent Office
Office européen des brevets

(11) **EP 4 654 149 A1**

(12) **EUROPEAN PATENT APPLICATION**
published in accordance with Art. 153(4) EPC

(43) Date of publication:
26.11.2025 Bulletin 2025/48

(21) Application number: 24767369.2

(22) Date of filing: 04.03.2024

(51) International Patent Classification (IPC):
G06T 19/20 (2011.01)    G06T 15/04 (2011.01)
G06T 15/06 (2011.01)    G06T 7/49 (2017.01)
G06F 40/10 (2020.01)    G06T 17/00 (2006.01)

(52) Cooperative Patent Classification (CPC):
G06F 40/10; G06T 7/49; G06T 15/04; G06T 15/06;
G06T 17/00; G06T 19/20

(86) International application number:
PCT/KR2024/002739

(87) International publication number:
WO 2024/186080 (12.09.2024 Gazette 2024/37)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.03.2023 KR 20230028666

(71) Applicant: LG Electronics Inc.
Yeongdeungpo-gu
Seoul 07336 (KR)

(72) Inventors:
• SONG, Hyeonseop
  Seoul 06772 (KR)
• KIM, Taehyeong
  Seoul 06772 (KR)
• CHOI, Seokhun
  Seoul 06772 (KR)
• DO, Hoseok
  Seoul 06772 (KR)

(74) Representative: Vossius & Partner
Patentanwälte Rechtsanwälte mbB
Siebertstraße 3
81675 München (DE)

(54) **NATURAL LANGUAGE-BASED THREE-DIMENSIONAL OBJECT MANIPULATION DEVICE AND METHOD**

(57) The present disclosure relates to a device and method for manipulating 3D object based on natural language capable of performing partial manipulation of a source object based on natural language using a 3D object manipulation model, when a user command and a source object are input, extracts a manipulation region and manipulation information of the source object from the user command, generates a 3D original image of the source object through the first rendering model, generates a 3D editable image of the source object based on the extracted manipulation information through the second rendering model, determines an editing region of the 3D original image based on the extracted manipulation region, and blends the 3D original image and the 3D editable image based on the determined editing region to generate a 3D target image.

FIG. 4

## Description

[Technical Field]

The present disclosure relates to a device and method for manipulating 3D object based on natural language capable of performing partial manipulation of a source object based on natural language using a 3D object manipulation model.

[Background Art]

In general, artificial intelligence is a field of computer engineering and information technology that studies how to enable computers to think, learn, and develop themselves in ways that human intelligence can do, meaning that computers can imitate human intelligent behavior.

In addition, artificial intelligence does not exist in itself, but is directly or indirectly related to other fields of computer science. In particular, in modern times, attempts are being made to introduce artificial intelligence elements into various fields of information technology and utilize them to solve problems in those fields.

Recently, neural network-based computer vision technologies for generating and rendering 3D scenes have been widely used in virtual reality, content creation, and game development.

In particular, among these technologies, 3D object manipulation technologies have the main goal of modeling 3D scenes and allowing viewing of those scenes from new perspectives.

In other words, 3D object manipulation technology is a technology that creates views from angles that were not captured by observing a specific object or scene from multiple viewpoints and displays them as if they were 3D rendered.

However, these 3D object manipulation techniques have problems such as being unuser-friendly because they specify the modification area of the 3D object through a mask provided by the user, or only allowing overall style changes of the 3D object and not allowing partial manipulation, and requiring learning a large amount of data corresponding to the category of the object to be manipulated.

Therefore, in the future, it is necessary to develop a 3D object manipulation device that can partially and easily manipulate a 3D object by selecting the manipulation region of the 3D object based on natural language without directly learning the 3D object to be manipulated.

[Disclosure]

[Technical Problem]

An object of the present disclosure is to solve the above-described problems and other problems.

An object of the present disclosure is to provide a 3D object manipulation device and method capable of partially and easily manipulating a 3D object without learning a large amount of data by extracting a manipulation region and manipulation information of a 3D object based on natural language.

[Technical Solution]

According to an embodiment of the present disclosure, a 3D object manipulation device includes a memory storing a first rendering model and a second rendering model; and a processor manipulating a 3D object based on the first rendering model and the second rendering model, in which the processor, when a user command and a source object are input, may extract a manipulation region and manipulation information of the source object from the user command, generate a 3D original image of the source object through the first rendering model, generate a 3D editable image of the source object based on the extracted manipulation information through the second rendering model, determine an editing region of the 3D original image based on the extracted manipulation region, and blend the 3D original image and the 3D editable image based on the determined editing region to generate a 3D target image.

According to an embodiment of the present disclosure, a method for manipulating a 3D object includes receiving a user command and a source object; extracting a manipulation region and manipulation information of the source object from the user command when the user command and the source object are input; generating a 3D original image of the source object through a first rendering model, and generating a 3D editable image of the source object based on the extracted manipulation information through a second rendering model; determining an editing region of the 3D original image based on the extracted manipulation region; and generating a 3D target image by blending the 3D original image and the 3D editable image based on the determined editing region.

[Advantageous Effect]

According to one embodiment of the present disclosure, a 3D object manipulation device can partially and easily manipulate a 3D object without learning a large amount of data by extracting a manipulation region and manipulation information of a 3D object based on natural language.

In addition, the present disclosure improves user convenience and enables partial manipulation of a 3D object by allowing the user to select a desired manipulation region from a 3D object through natural language input.

In addition, the present disclosure is efficient and economical because it enables manipulation of all or part of a pre-learned 3D object based on delayed words without directly learning the pre-learned 3D object, and therefore does not require a large learning data set.

[Description of Drawings]

FIG. 1 illustrates an artificial intelligence apparatus according to an embodiment of the present disclosure.

FIG. 2 illustrates an artificial intelligence server according to an embodiment of the present disclosure.

FIG. 3 illustrates an artificial intelligence system according to an embodiment of the present disclosure.

FIG. 4 is a view for explaining the operation of a 3D object manipulation device according to an embodiment of the present disclosure.

FIGS. 5 to 9 are views for explaining the manipulation operation of a 3D object manipulation device according to an embodiment of the present disclosure.

FIG. 10 is a view illustrating a 3D target image generated through various manipulation operations of a 3D object manipulation device according to an embodiment of the present disclosure.

FIG. 11 is a view for explaining an operation process of a 3D object manipulation device according to an embodiment of the present disclosure.

[Best Mode]

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the disclosure in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

<Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of training an artificial neural network in a state in which a label for learning data is given, and the label may mean the correct answer (or result value) that the artificial neural network must infer when the learning data is input to the artificial neural network. The unsupervised learning may refer to a method of training an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

<Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot includes a driving unit may include an actuator or a motor and may perform various physical operations such as moving a robot joint. In addition, a movable robot may include a wheel, a brake, a propeller, and the like in a driving unit, and may travel on the ground through the driving unit or fly in the air.

<Self-Driving>

Self-driving refers to a technique of driving for oneself, and a self-driving vehicle refers to a vehicle that travels without an operation of a user or with a minimum operation of a user.

For example, the self-driving may include a technology for maintaining a lane while driving, a technology for automatically adjusting a speed, such as adaptive cruise control, a technique for automatically traveling along a predetermined route, and a technology for automatically setting and traveling a route when a destination is set.

The vehicle may include a vehicle having only an internal combustion engine, a hybrid vehicle having an internal combustion engine and an electric motor together, and an electric vehicle having only an electric motor, and may include not only an automobile but also a train, a motorcycle, and the like.

In this case, the self-driving vehicle may be regarded as a robot having a self-driving function.

<eXtended Reality (XR)>

Extended reality is collectively referred to as virtual reality (VR), augmented reality (AR), and mixed reality (MR). The VR technology provides a real-world object and background only as a CG image, the AR technology provides a virtual CG image on a real object image, and the MR technology is a computer graphic technology that mixes and combines virtual objects into the real world.

The MR technology is similar to the AR technology in that the real object and the virtual object are illustrated together. However, in the AR technology, the virtual object is used in the form that complements the real object, whereas in the MR technology, the virtual object and the real object are used in an equal manner.

The XR technology may be applied to a head-mount display (HMD), a head-up display (HUD), a mobile phone, a tablet PC, a laptop, a desktop, a TV, a digital signage, and the like. A device to which the XR technology is applied may be referred to as an XR device.

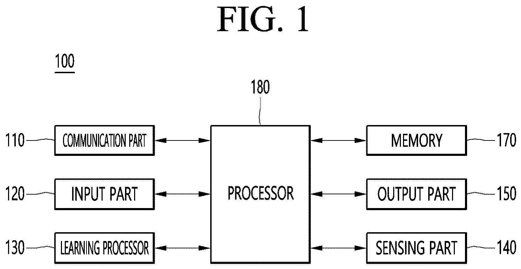

FIG. 1 illustrates an AI device 100 according to an embodiment of the present disclosure.

The AI device (or an AI apparatus) 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from external devices such as other AI devices 100a to 100e and the AI server 200 by using wire/wireless communication technology. For example, the communication unit 110 may transmit and receive sensor information, a user input, a learning model, and a control signal to and from external devices.

The communication technology used by the communication unit 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth™, RFID (Radio Frequency Identification), Infrared Data Association (IrDA), ZigBee, NFC (Near Field Communication), and the like.

The input unit 120 may acquire various kinds of data.

In this case, the input unit 120 may include a camera for inputting a video signal, a microphone for receiving an audio signal, and a user input unit for receiving information from a user. The camera or the microphone may be treated as a sensor, and the signal obtained from the camera or the microphone may be referred to as sensing data or sensor information.

The input unit 120 may acquire a learning data for model learning and an input data to be used if an output is obtained by using learning model. The input unit 120 may acquire raw input data. In this case, the processor 180 or the learning processor 130 may extract an input feature by preprocessing the input data.

The learning processor 130 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

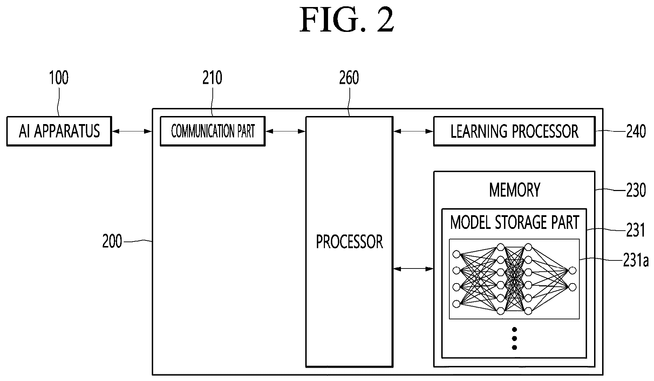

At this time, the learning processor 130 may perform AI processing together with the learning processor 240 of the AI server 200 of FIG. 2.

At this time, the learning processor 130 may include a memory integrated or implemented in the AI device 100. Alternatively, the learning processor 130 may be implemented by using the memory 170, an external memory directly connected to the AI device 100, or a memory held in an external device.

The sensing unit 140 may acquire at least one of internal information about the AI device 100, ambient environment information about the AI device 100, and user information by using various sensors.

Examples of the sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to a visual sense, an auditory sense, or a haptic sense.

At this time, the output unit 150 may include a display unit for outputting time information, a speaker for outputting auditory information, and a haptic module for outputting haptic information.

The memory 170 may store data that supports various functions of the AI device 100. For example, the memory 170 may store input data obtained by the input unit 120, learning data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for the user input and may determine the user's requirements based on the obtained intention information.

The processor 180 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI apparatus 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in the memory 170. Furthermore, the processor 180 may operate two or more of the components included in the AI device 100 in combination so as to drive the application program.

FIG. 2 illustrates an AI server 200 according to an embodiment of the present disclosure.

Referring to FIG. 2, the AI server 200 may refer to a device that learns an artificial neural network by using a machine learning algorithm or uses a learned artificial neural network/ The AI server 200 may include a plurality of servers to perform distributed processing or may be defined as a 5G network. In this case, the AI server 200 may be included as a partial configuration of the AI device 100, and may perform at least part of the AI processing together.

The AI server 200 may include a communication unit 210, a memory 230, a learning processor 240, a processor 260, and the like.

The communication unit 210 may transmit and receive data to and from an external device such as the AI device 100.

The memory 230 may include a model storage unit 231. The model storage unit 231 may store a learning or learned model (or an artificial neural network 231a) through the learning processor 240.

The learning processor 240 may learn the artificial neural network 231a by using the learning data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

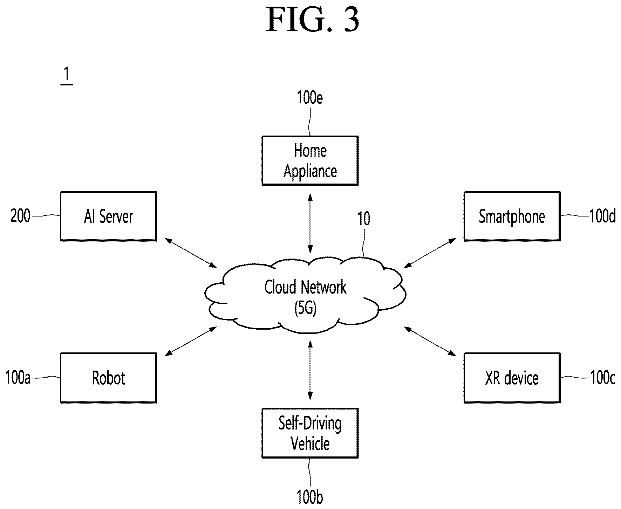

FIG. 3 is a view of an AI system 1 according to an embodiment of the present invention.

Referring to FIG. 3, in the AI system 1, at least one of an AI server 200, a robot 100a, a self-driving vehicle 100b, an XR device 100c, a smartphone 100d, or a home appliance 100e is connected to a cloud network 10. The robot 100a, the self-driving vehicle 100b, the XR device 100c, the smartphone 100d, or the home appliance 100e, to which the AI technology is applied, may be referred to as AI devices 100a to 100e.

The cloud network 10 may refer to a network that forms part of a cloud computing infrastructure or exists in a cloud computing infrastructure. The cloud network 10 may be configured by using a 3G network, a 4G or LTE network, or a 5G network.

In other words, the devices 100a to 100e and 200 configuring the AI system 1 may be connected to each other through the cloud network 10. In particular, each of the devices 100a to 100e and 200 may communicate with each other through a base station, but may directly communicate with each other without using a base station.

The AI server 200 may include a server that performs AI processing and a server that performs operations on big data.

The AI server 200 may be connected to at least one of the AI devices constituting the AI system 1, that is, the robot 100a, the self-driving vehicle 100b, the XR device 100c, the smartphone 100d, or the home appliance 100e through the cloud network 10, and may assist at least part of AI processing of the connected AI devices 100a to 100e.

At this time, the AI server 200 may learn the artificial neural network according to the machine learning algorithm instead of the AI devices 100a to 100e, and may directly store the learning model or transmit the learning model to the AI devices 100a to 100e.

At this time, the AI server 200 may receive input data from the AI devices 100a to 100e, may infer the result value for the accommodated input data by using the learning model, may generate a response or a control command based on the inferred result value, and may transmit the response or the control command to the AI devices 100a to 100e.

Alternatively, the AI devices 100a to 100e may infer the result value for the input data by directly using the learning model, and may generate the response or the control command based on the inference result.

Hereinafter, various embodiments of the AI devices 100a to 100e to which the above-described technology is applied will be described. The AI devices 100a to 100e illustrated in FIG. 3 may be regarded as a specific embodiment of the AI device 100 illustrated in FIG. 1.

<AI + Robot>

The robot 100a, to which the AI technology is applied, may be implemented as a guide robot, a carrying robot, a cleaning robot, a wearable robot, an entertainment robot, a pet robot, an unmanned flying robot, or the like.

The robot 100a may include a robot control module for controlling the operation, and the robot control module may refer to a software module or a chip implementing the software module by hardware.

The robot 100a may acquire state information about the robot 100a by using sensor information obtained from various kinds of sensors, may detect (recognize) surrounding environment and objects, may generate map data, may determine the route and the travel plan, may determine the response to user interaction, or may determine the operation.

The robot 100a may use the sensor information obtained from at least one sensor among the lidar, the radar, and the camera so as to determine the travel route and the travel plan.

The robot 100a may perform the above-described operations by using the learning model provided as at least one artificial neural network. For example, the robot 100a may recognize the surrounding environment and the objects by using the learning model, and may determine the operation by using the recognized surrounding information or object information. The learning model may be learned directly from the robot 100a or may be learned from an external device such as the AI server 200.

At this time, the robot 100a may perform the operation by generating the result by directly using the learning model, but the sensor information may be transmitted to the external device such as the AI server 200 and the generated result may be accommodated to perform the operation.

The robot 100a may use at least one of the map data, the object information detected from the sensor information, or the object information obtained from the external apparatus to determine the travel route and the travel plan, and may control the driving unit such that the robot 100a travels along the determined travel route and travel plan.

The map data may include object identification information about various objects arranged in the space in which the robot 100a moves. For example, the map data may include object identification information about fixed objects such as walls and doors and movable objects such as pollen and desks. The object identification information may include a name, a type, a distance, and a position.

In addition, the robot 100a may perform the operation or travel by controlling the driving unit based on the control/interaction of the user. At this time, the robot 100a may acquire the intention information of the interaction due to the user's operation or speech utterance, and may determine the response based on the obtained intention information, and may perform the operation.

<AI + Self-Driving>

The self-driving vehicle 100b, to which the AI technology is applied, may be implemented as a mobile robot, a vehicle, an unmanned flying vehicle, or the like.

The self-driving vehicle 100b may include a self-driving control module for controlling a self-driving function, and the self-driving control module may refer to a software module or a chip implementing the software module by hardware. The self-driving control module may be included in the self-driving vehicle 100b as a component thereof, but may be implemented with separate hardware and connected to the outside of the self-driving vehicle 100b.

The self-driving vehicle 100b may acquire state information about the self-driving vehicle 100b by using sensor information obtained from various kinds of sensors, may detect (recognize) surrounding environment and objects, may generate map data, may determine the path and the travel plan, or may determine the operation.

Like the robot 100a, the self-driving vehicle 100b may use the sensor information obtained from at least one sensor among the lidar, the radar, and the camera so as to determine the travel path and the travel plan.

In particular, the self-driving vehicle 100b may recognize the environment or objects for an area covered by a field of view or an area over a certain distance by receiving the sensor information from external devices, or may receive directly recognized information from the external devices.

The self-driving vehicle 100b may perform the above-described operations by using the learning model composed of at least one artificial neural network. For example, the self-driving vehicle 100b may recognize the surrounding environment and the objects by using the learning model, and may determine the traveling movement line by using the recognized surrounding information or object information. The learning model may be learned directly from the self-driving vehicle 100a or may be learned from an external device such as the AI server 200.

In this case, the self-driving vehicle 100b may perform the operation by generating the result by directly using the learning model, but the sensor information may be transmitted to the external device such as the AI server 200 and the generated result may be received to perform the operation.

The self-driving vehicle 100b may use at least one of the map data, the object information detected from the sensor information, or the object information obtained from the external apparatus to determine the travel path and the travel plan, and may control the driving device such that the self-driving vehicle 100b travels along the determined travel path and travel plan.

The map data may include object identification information about various objects arranged in the space (for example, road) in which the self-driving vehicle 100b travels. For example, the map data may include object identification information about fixed objects such as street lamps, rocks, and buildings and movable objects such as vehicles and pedestrians. The object identification information may include a name, a type, a distance, and a position.

In addition, the self-driving vehicle 100b may perform the operation or travel by controlling the driving device based on the control/interaction of the user. In this case, the self-driving vehicle 100b may acquire the intention information of the interaction due to the user's operation or speech utterance, and may determine the response based on the obtained intention information, and may perform the operation.

<AI+XR>

The XR device 100c, to which the AI technology is applied, may be implemented by a head-mount display (HMD), a head-up display (HUD) provided in the vehicle, a television, a mobile phone, a smartphone, a computer, a wearable device, a home appliance, a digital signage, a vehicle, a fixed robot, a mobile robot, or the like.

The XR device 100c may analyzes 3D point cloud data or image data obtained from various sensors or the external devices, generate position data and attribute data for the 3D points, acquire information about the surrounding space or the real object, and render to output the XR object to be output. For example, the XR device 100c may output an XR object including the additional information about the recognized object in correspondence to the recognized object.

The XR device 100c may perform the above-described operations by using the learning model composed of at least one artificial neural network. For example, the XR device 100c may recognize the real object from the 3D point cloud data or the image data by using the learning model, and may provide information corresponding to the recognized real object. The learning model may be directly learned from the XR device 100c, or may be learned from the external device such as the AI server 200.

In this case, the XR device 100c may perform the operation by generating the result by directly using the learning model, but the sensor information may be transmitted to the external device such as the AI server 200 and the generated result may be received to perform the operation.

<AI + Robot + Self-Driving>

The robot 100a, to which the AI technology and the self-driving technology are applied, may be implemented as a guide robot, a carrying robot, a cleaning robot, a wearable robot, an entertainment robot, a pet robot, an unmanned flying robot, or the like.

The robot 100a, to which the AI technology and the self-driving technology are applied, may refer to the robot itself having the self-driving function or the robot 100a interacting with the self-driving vehicle 100b.

The robot 100a having the self-driving function may collectively refer to a device that moves for itself along the given movement line without the user's control or moves for itself by determining the movement line by itself.

The robot 100a and the self-driving vehicle 100b having the self-driving function may use a common sensing method so as to determine at least one of the travel route or the travel plan. For example, the robot 100a and the self-driving vehicle 100b having the self-driving function may determine at least one of the travel route or the travel plan by using the information sensed through the lidar, the radar, and the camera.

The robot 100a that interacts with the self-driving vehicle 100b exists separately from the self-driving vehicle 100b and may perform operations interworking with the self-driving function of the self-driving vehicle 100b or interworking with the user who rides on the self-driving vehicle 100b.

At this time, the robot 100a interacting with the self-driving vehicle 100b may control or assist the self-driving function of the self-driving vehicle 100b by acquiring sensor information on behalf of the self-driving vehicle 100b and providing the sensor information to the self-driving vehicle 100b, or by acquiring sensor information, generating environment information or object information, and providing the information to the self-driving vehicle 100b.

Alternatively, the robot 100a interacting with the self-driving vehicle 100b may monitor the user boarding the self-driving vehicle 100b, or may control the function of the self-driving vehicle 100b through the interaction with the user. For example, when it is determined that the driver is in a drowsy state, the robot 100a may activate the self-driving function of the self-driving vehicle 100b or assist the control of the driving unit of the self-driving vehicle 100b. The function of the self-driving vehicle 100b controlled by the robot 100a may include not only the self-driving function but also the function provided by the navigation system or the audio system provided in the self-driving vehicle 100b.

Alternatively, the robot 100a that interacts with the self-driving vehicle 100b may provide information or assist the function to the self-driving vehicle 100b outside the self-driving vehicle 100b. For example, the robot 100a may provide traffic information including signal information and the like, such as a smart signal, to the self-driving vehicle 100b, and automatically connect an electric charger to a charging port by interacting with the self-driving vehicle 100b like an automatic electric charger of an electric vehicle.

<AI + Robot + XR>

The robot 100a, to which the AI technology and the XR technology are applied, may be implemented as a guide robot, a carrying robot, a cleaning robot, a wearable robot, an entertainment robot, a pet robot, an unmanned flying robot, a drone, or the like.

The robot 100a, to which the XR technology is applied, may refer to a robot subjected to control/interaction in an XR image. In this case, the robot 100a may be separated from the XR device 100c and interwork with each other.

If the robot 100a, which is subjected to control/interaction in the XR image, may acquire the sensor information from the sensors including the camera, the robot 100a or the XR device 100c may generate the XR image based on the sensor information, and the XR device 100c may output the generated XR image. The robot 100a may operate based on the control signal input through the XR device 100c or the user's interaction.

For example, the user may confirm the XR image corresponding to the time point of the robot 100a interworking remotely through the external device such as the XR device 100c, adjust the self-driving travel path of the robot 100a through interaction, control the operation or driving, or confirm the information about the surrounding object.

<AI + Self-Driving + XR>

The self-driving vehicle 100b, to which the AI technology and the XR technology are applied, may be implemented as a mobile robot, a vehicle, an unmanned flying vehicle, or the like.

The self-driving vehicle 100b, to which the XR technology is applied, may refer to a self-driving vehicle having a means for providing an XR image or a self-driving vehicle subjected to control/interaction in an XR image. Particularly, the self-driving vehicle 100b In other words subjected to control/interaction in the XR image may be distinguished from the XR device 100c and interwork with each other.

The self-driving vehicle 100b having the means for providing the XR image may acquire the sensor information from the sensors including the camera and output the generated XR image based on the obtained sensor information. For example, the self-driving vehicle 100b may include an HUD to output an XR image, thereby providing a passenger with a real object or an XR object corresponding to an object in the screen.

In this case, if the XR object is output to the HUD, at least part of the XR object may be outputted so as to overlap the actual object to which the passenger's gaze is directed. Meanwhile, if the XR object is output to the display provided in the self-driving vehicle 100b, at least part of the XR object may be output so as to overlap the object in the screen. For example, the self-driving vehicle 100b may output XR objects corresponding to objects such as a lane, another vehicle, a traffic light, a traffic sign, a two-wheeled vehicle, a pedestrian, a building, and the like.

If the self-driving vehicle 100b, which is subjected to control/interaction in the XR image, may acquire the sensor information from the sensors including the camera, the self-driving vehicle 100b or the XR device 100c may generate the XR image based on the sensor information, and the XR device 100c may output the generated XR image. The self-driving vehicle 100b may operate based on the control signal input through the external device such as the XR device 100c or the user's interaction.

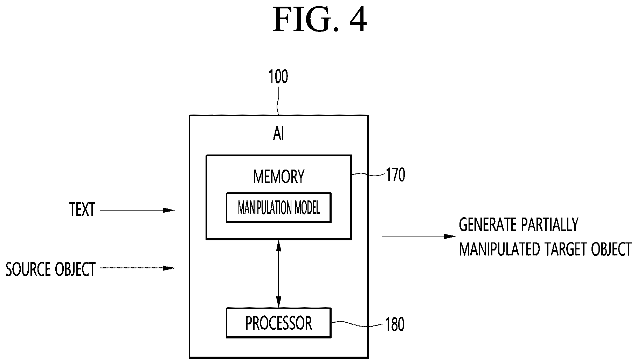

FIG. 4 is a view for explaining the operation of a 3D object manipulation device according to an embodiment of the present disclosure.

As illustrated in FIG. 4, the 3D object manipulation device of the present disclosure may be an AI device 100 capable of performing partial manipulation of a source object based on natural language using a 3D object manipulation model.

The present disclosure may include a memory 170 in which a manipulation model including a first rendering model and a second rendering model is stored, and a processor 180 that manipulates a 3D object based on the first rendering model and the second rendering model.

The processor 180 extracts a manipulation region and manipulation information of a source object from a user command when a user command and a source object are input, generates a 3D original image of the source object through a first rendering model, generates a 3D editable image of the source object based on the manipulation information extracted through a second rendering model, determines an editing region of the 3D original image based on the extracted manipulation region, and blends the 3D original image and the 3D editable image based on the determined editing region to generate a 3D target image.

In one embodiment, when extracting the manipulation region and manipulation information of a source object, the processor 180 can extract a source text corresponding to the manipulation region of the source object to be manipulated and a target text corresponding to the manipulation information of the source object from the user prompt if the user command is a user prompt.

Here, the processor 180 can recognize the source text identified as a noun as the manipulation region of the source object when the user prompt includes texts including nouns and adjectives, and recognize the target text identified as an adjective as manipulation information of the source object.

For example, if the user prompt includes the text "burning boat," the processor 180 may recognize the text "boat," identified as a noun, as the manipulation region of the source object, and recognize the text "burning," identified as an adjective, as manipulation information of the source object.

In addition, when a user prompt includes a plurality of texts, the processor 180 can recognize a text inputted in the priority order as the manipulation region of the source object based on the input order of the a plurality of texts, and recognize a text inputted in the latter order as manipulation information of the source object.

For example, if the user prompt includes the text "bulldozer frame," the processor 180 may recognize the text "bulldozer" inputted as the priority order as the manipulation region of the source object, and recognize the text "frame" inputted as the latter order as manipulation information of the source object.

Additionally, the processor 180 may request re-input of the user command if at least one of the manipulation region and manipulation information of the source object is not recognized from the text extracted from the user prompt.

Here, when requesting re-input of a user command, the processor 180 can generate and output a guide notification corresponding to the user command re-input request in text type or voice type.

As another embodiment, when extracting the manipulation region and manipulation information of the source object, the processor 180 can convert the user voice into text if the user command is a user voice, and extract a first text corresponding to the manipulation region of the source object to be manipulated and a second text corresponding to the manipulation information of the source object from the converted text.

Here, the processor 180 can recognize a text inputted in the priority order as a manipulation region of a source object based on the input order of a plurality of texts converted from a user's voice, and recognize a text inputted in the latter order as manipulation information of the source object.

Additionally, the processor 180 may request re-input of the user command if at least one of the manipulation region and manipulation information of the source object is not recognized from the text converted from the user's voice.

Here, when requesting re-input of a user command, the processor 180 can generate and output a guide notification corresponding to the user command re-input request in text type or voice type.

In addition, the processor 180 can estimate a source object from a user command when only a user command is input, and obtain a 2D original image corresponding to the estimated source object from a pre-learned dataset.

In some cases, the processor 180 can recognize a source object from a 2D original image when a source object including a 2D original image is input together with a user command.

Here, the manipulation region of the source object may include the entire area or a part of the 2D original image corresponding to the source object.

In addition, the manipulation information of the source object may include at least one of changing color, removing density, and adding density of an area to be manipulated among a 2D original image corresponding to the source object.

Next, when generating a 3D original image of a source object, the processor 180 can input the location information of the source object into the first rendering model to generate a 3D original image having a view direction corresponding to the location information.

Here, the processor 180 can obtain the color and density of each pixel corresponding to the 3D original image when generating a 3D original image of the source object.

Additionally, the processor 180 can input location information of the source object to the first rendering model and the second rendering model simultaneously.

This is because the creation of a 3D original image and a 3D editable image can be performed together through the first rendering model and the second rendering model, thereby improving speed and efficiency.

Here, the first rendering model may include a pre-learned NeRF (Neural Radiance Fields) model, or the like.

Next, when generating a 3D editable image of a source object, the processor 180 can input the location information of the source object into the second rendering model to generate a 3D editable image having a view direction corresponding to the location information.

Here, when generating a 3D editable image of a source object, the processor 180 can obtain the color, density, blending ratios of the color, and blending ratios of the density of each pixel corresponding to the 3D editable image, calculate the blending color of the 3D original image of the source object based on the blending ratios of the color, and calculate the blending density of the 3D original image of the source object based on the blending ratios of the density.

For example, when calculating the blending density of a 3D original image of a source object, the processor 180 can calculate the blending density of the 3D original image of the source object based on the following mathematical expression 1.

## 【Mathematical Expression 1】

$$\sigma^{o'} = (1 - \beta^{\sigma})\,\sigma^{o}$$

Here, $\sigma^{o}$ is the blending density, $\beta^{c}$ is the blending ratio of the density, and $\sigma^{o}$ is the density of the 3D original image.

In addition, when calculating the blending color of the 3D original image of the source object, the processor 180 can calculate the blending color of the 3D original image of the source object based on the following mathematical expression 2.

## 【Mathematical Expression 2】

$$c^{o'} = (1 - \beta^{c})\,c^{o} + \beta^{c}\,c$$

Here, $c^{o'}$ is the blending color, $\beta^{c}$ is the blending ratio of the color, $c^{o}$ is the color of the 3D original image, and $c^{e}$ is the color of the 3D editable image.

In addition, when obtaining the blending ratio of color and the blending ratio of density, the processor 180 can check whether a reference blending ratio corresponding to a 3D editable image of a pre-learned source object is stored in advance in the memory 170, and if the reference blending ratio is stored in the memory 170, obtain the blending ratio of color and the blending ratio of density based on the reference blending ratio.

Here, the processor 180 can request a user blending ratio corresponding to the blending ratio of color and density if the reference blending ratio is not stored in the memory 170, and if the user blending ratio is input, obtain the blending ratio of color and the blending ratio of density through the input user blending ratio.

In addition, the processor 180, when obtaining the blending ratio of color and the blending ratio of density, can check whether a user blending ratio corresponding to a 3D editable image of a pre-learned source object is input, and if the user blending ratio is input, the blending ratio of color and the blending ratio of density can be obtained through the input user blending ratio.

Here, the processor 180 may request input of a user blending ratio if the user blending ratio is not input.

For example, the processor 180, when requesting input of a user blending ratio, can generate and output a notification corresponding to the user blending ratio input request in text type or voice type.

The processor 180, when generating a 3D editable image of a source object, can input location information of the source object into the first rendering model and the second rendering model simultaneously.

Here, the second rendering model may include a pre-learned editable Neural Radiance Fields (NeRF) model or the like.

Next, the processor 180, when determining an editing region of a 3D original image, can input data related to the manipulation region of the source object and the 3D original image into a pre-learned image segmentation model to segment an area to be manipulated from the 3D original image, determine an editing region based on the segmented area, and generate an editing region mask corresponding to the determined editing region.

Here, the processor 180 can induce a 3D editable image to be positioned in the editing region of the 3D original image by using an editing region mask.

In some cases, the processor 180, when determining an editing region of a 3D original image, if a user input designating a specific area of the 3D original image is received, can segment a specific area designated by the user input from the 3D original image, determine an editing region based on the segmented area, and generate an editing region mask corresponding to the determined editing region.

Here, the processor 180 can induce a 3D editable image to be positioned in the editing region of the 3D original image by using an editing region mask.

Next, the processor 180, when generating a 3D target image, can match the 3D editable image to the editing region of the 3D original image and manipulate the editing region of the 3D original image of the source object based on the pre-obtained blending ratio to generate the 3D target image.

Here, the processor 180, when manipulating the editing region of the 3D original image of the source object, can apply at least one of changing color, adding densities, and removing densities to the editing region of the 3D original image of the source object based on a pre-obtained blending ratio.

In other words, , the processor 180, when manipulating the editing region of the 3D original image of the source object, can calculate the blending color of the 3D original image of the source object based on the blending ratio of the color, calculate the blending density of the 3D original image of the source object based on the blending ratio of the density, and apply at least one of color change, density addition, and density removal to the editing region of the 3D original image of the source object based on the calculated blending color and blending density of the 3D original image of the source object.

Here, the processor 180, when obtaining a blending ratio, can check whether a reference blending ratio corresponding to a 3D editable image of a pre-learned source object is stored in advance in the memory 170, and if the reference blending ratio is stored in the memory 170, the blending ratio of color and the blending ratio of density can be obtained based on the reference blending ratio.

At this time, the processor 180, if the reference blending ratio is not stored in the memory 170, can request a user blending ratio corresponding to the blending ratio of color and density, and if the user blending ratio is input, obtain the blending ratio of color and the blending ratio of density through the input user blending ratio.

In some cases, the processor 180, when obtaining a blending ratio, can check whether a user blending ratio corresponding to a 3D editable image of a pre-learned source object is input, and if a user blending ratio is input, obtain the blending ratio of the color and the blending ratio of the density through the input user blending ratio.

Here, the processor 180 can request input of a user blending ratio if the user blending ratio is not input.

At this time, the processor 180, when requesting input of a user blending ratio, can generate and output a notification corresponding to the user blending ratio input request in text type or voice type.

In addition, the processor 180, when generating a 3D target image, can generate the 3D target image based on the following mathematical expression 3.

【Mathematical Expression 3】

$$L_{total} = L_{clip} + \lambda_1 L_{region} + \lambda_2 L_{opacity} + \lambda_3 L_{reg}$$

Here, $\lambda_1, \lambda_2, \lambda_3$ are hyperparameters for loss balance, $L_{total}$ is the total loss of the 3D target image whose editing region is manipulated, $L_{clip}$ is the loss of the 3D target image whose editing region is manipulated according to the desired text, $L_{region}$ is the loss of the 3D target image whose editing region is manipulated according to the desired region, and $L_{opacity}$ and $L_{reg}$ are the losses of the 3D target image whose editing region is manipulated according to the desired ratio.

Here, the processor 180 can calculate $L_{clip}$ based on the following mathematical expression 4.

【Mathematical Expression 4】

$$L_{clip} = L_{dir} + \lambda_{global} L_{global}$$

Here, $L_{dir}$ is a loss to control the direction of change of image embedding vector, $\lambda_{global}$ is a hyperparameter to balance directional and global CLIP losses, and $L_{global}$ is the global CLIP (Contrastive Language-Image Pre-Training) losses.

Additionally, the processor 180 can calculate $L_{region}$ based on the following mathematical expression 5.

【Mathematical Expression 5】

$$L_{region} = MSE([0]_{s \times s}, M_{-} \odot E_{sum}) + \lambda_{-} MSE([1]_{s \times s}, M_{-} \odot E_{sum})$$

Here, $E_{sum}$ is the pixel-wise sum of accumulated opacity patches, $\odot$ is the pixel-wise multiplication, and $\lambda_+$ is a hyperparameter to balance the two terms.

Additionally, the processor 180 can calculate $L_{opacity}$ based on the following mathematical expression 6.

【Mathematical Expression 6】

$$L_{opacity} = \sum_x \max(\gamma^x, mean(E_{acc}^x(\theta, \phi, \rho)))$$

Here, x includes add corresponding to density addition, remove corresponding to density removal, and change corresponding to color alteration, $\gamma^x$ is a threshold that limits the amount of density addition and removal and color alteration, and annealing $E_{acc}^{x}(\theta,\phi,\rho)$ for stable learning is the pixel-wise sum of three accumulated opacity patches as $E_{sum}$.

Additionally, the processor 180 can calculate $L_{reg}$ based on the following mathematical expression 7.

# 【Mathematical Expression 7】

$$L_{reg} = -mean(F(E_{acc}^{x}(\theta,\phi,\rho)))$$

Here, $F(z)$ is, as $z\log_2 z+(1-z)\log_2(1-z)$, a binary entropy function, and a regularization loss $L_{reg}$ can be applied to the opaque patches $L_{reg}$ to avoid adding ambiguous densities.

Next, the processor 180 can blend the 3D editable image in the editing region by performing a manipulation including at least one of color change, density addition, and density removal in the editing region of the 3D original image when generating the 3D target image.

Here, the processor 180 can control the display screen to display manipulation information of an editing region around a 3D target image when a 3D target image is generated.

For example, manipulation information of an editing region may include at least one of color change, adding density, and removing density, and may be displayed in various forms such as markers, text, and colors.

In this way, the present disclosure extracts the manipulation region and manipulation information of a 3D object based on natural language, thereby enabling easy partial manipulation of a 3D object without learning a large amount of data.

In addition, the present disclosure improves user convenience and enables partial manipulation of a 3D object by allowing the user to select a desired manipulation region from a 3D object through natural language input.

In addition, the present disclosure is efficient and economical because it enables manipulation of all or part of a pre-learned 3D object based on delayed words without directly learning the pre-learned 3D object, and therefore does not require a large learning data set.

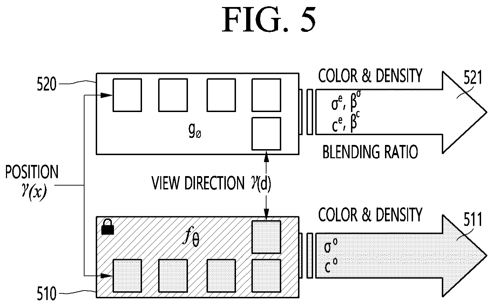

FIGS. 5 to 9 are views for explaining the manipulation operation of a 3D object manipulation device according to an embodiment of the present disclosure.

The present disclosure enables easy manipulation of a 3D object, in whole or in part, using a first rendering model 510 and a second rendering model 520 based on a user's natural language.

Here, the present disclosure can extract the manipulation region and manipulation information of the source object from the user command when a user command including a user prompt, a user voice, and the like, and a source object are input.

As illustrated in FIG. 5, the present disclosure can input location information $\gamma(x)$ of a source object into a first rendering model 510 to generate a 3D original image having a view direction $\lambda(d)$ corresponding to the location information.

Here, the present disclosure can obtain the color $c^c$ and density $\sigma^c$ of each pixel corresponding to the 3D original image (511).

In addition, the present disclosure can input location information $\gamma(x)$ of a source object into a second rendering model 520 to generate a 3D editable image having a view direction $\lambda(d)$ corresponding to the location information.

Here, the present disclosure can obtain the color $c^e$, density $\sigma^e$, blending ratios $\beta^{c}$ of color, and blending ratios $\beta^{c}$ of density of each pixel corresponding to the 3D editable image (521).

Meanwhile, the present disclosure can simultaneously input location information of a source object into the first rendering model 510 and the second rendering model 520.

This is because the operations of generating a 3D original image and a 3D editable image can be performed together through the first rendering model 510 and the second rendering model 520, thereby improving speed and efficiency.

Here, the first rendering model 510 may include a pre-learned NeRF (Neural Radiance Fields) model, and the second rendering model 520 may include a pre-learned editable NeRF (editable Neural Radiance Fields) model, and the like.

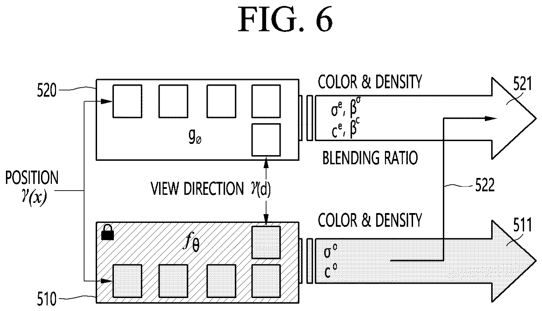

Next, as illustrated in FIG. 6, the present disclosure can calculate a blending color of a 3D original image of a source object based on a blending ratio of color, and can calculate a blending density of a 3D original image of the source object based on a blending ratio of density (522).

For example, the present disclosure, when calculating the blending density of a 3D original image of a source object, can calculate the blending density of a 3D original image of the source object based on mathematical expression 1.

$$\sigma^{o'} = (1 - \beta^\sigma)\sigma^o$$

Here, $\sigma^o$ is the blending density, $\beta^c$ is the blending ratio of the density, and $\sigma^o$ is the density of the 3D original image.

In addition, the present disclosure can calculate the blending color of the 3D original image of the source object based on mathematical expression 2 when calculating the blending color of the 3D original image of the source object.

$$c^{o'} = (1 - \beta^c)c^o + \beta^c c$$

Here, $c^{o'}$ is the blending color, $\beta^c$ is the blending ratio of the color, $c^o$ is the color of the 3D original image, and $c^e$ is the color of the 3D editable image.

As another embodiment, the present disclosure can check whether a reference blending ratio corresponding to a 3D editable image of a pre-learned source object is stored in advance in a memory, and if the reference blending ratio is stored in the memory, obtain the color blending ratio and the density blending ratio based on the reference blending ratio.

In another embodiment, the present disclosure can check whether a user blending ratio corresponding to a 3D editable image of a pre-learned source object is input, and if the user blending ratio is input, obtain the color blending ratio and the density blending ratio through the input user blending ratio.

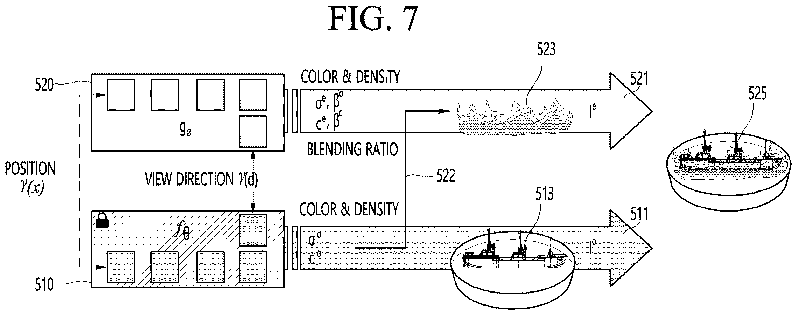

Next, as illustrated in FIG. 7, the present disclosure can generate a 3D original image 513 $I^c$ of a source object through a first rendering model 510, generate a 3D editable image 523 $I^e$ of the source object through a second rendering model 520, and generate a 3D target image 525 $I^f$ by blending the 3D original image 513 and the 3D editable image 523.

For example, the present disclosure can extract the manipulation region "boat" and the manipulation information "burning" of the source object from the user command when the user command is "burning boat" and the image of the source object is "a boat floating on water".

In addition, the present disclosure inputs position information $\gamma(x)$ of a source object into a first rendering model 510 and a second rendering model 520, respectively, to generate a 3D original image 513 $I^c$ corresponding to a "boat floating on water" and a 3D editable image 523 $I^e$ corresponding to "burning", which have a view direction $\lambda(d)$ corresponding to the position information, and blends the 3D original image 513 and the 3D editable image 523 to generate a 3D target image 525 $I^f$ in which the 3D editable image 523 matches an editing region corresponding to "boat" in the 3D original image 513.

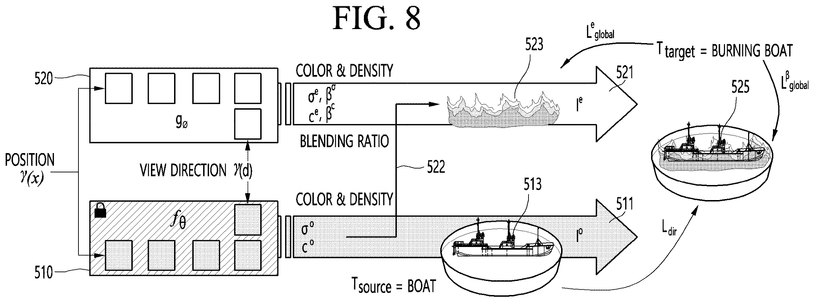

In addition, as illustrated in FIG. 8, the present disclosure can generate a 3D target image 525 by matching a 3D editable image 523 to an editing region of a 3D original image 513 and manipulating the editing region of the 3D original image 513 of the source object based on a pre-obtained blending ratio.

Here, the present disclosure can apply at least one of changing color, adding densities, and removing densities to an editing region of a 3D original image 513 of a source object based on a pre-obtained blending ratio.

The present disclosure can generate a 3D target image based on mathematical expression 3.

$$L_{total} = L_{clip} + \lambda_1 L_{region} + \lambda_2 L_{opacity} + \lambda_3 L_{reg}$$

Here, $\lambda_1, \lambda_2, \lambda_3$ are hyperparameters for loss balance, $L_{total}$ is the total loss of the 3D target image whose editing region is manipulated, $L_{clip}$ is the loss of the 3D target image whose editing region is manipulated according to the desired text, $L_{region}$ is the loss of the 3D target image whose editing region is manipulated according to the desired region, and $L_{opacity}$ and $L_{reg}$ are the losses of the 3D target image whose editing region is manipulated according to the desired ratio.

For example, the present disclosure can generate a 3D target image 525 corresponding to "burning boat" by blending a 3D original image 513 and a 3D editable image 523 using a first rendering model 510 and a second rendering model 520 based on source text "boat" and target text "burning boat" when the user command is "burning boat".

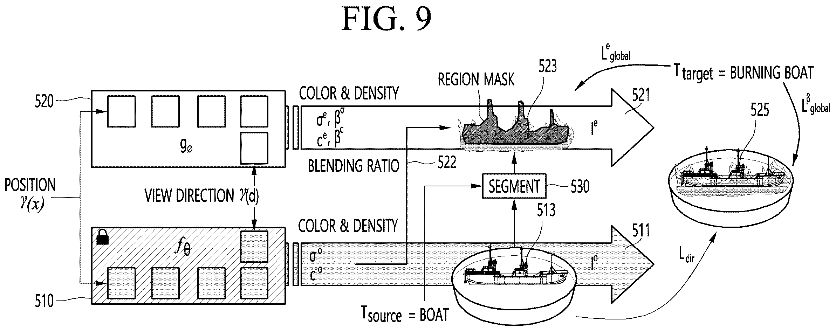

Next, as illustrated in FIG. 9, the present disclosure can determine an editing region of a 3D original image based on an operation region extracted from a user command.

Here, the present disclosure inputs data related to the manipulation region of a source object and a 3D original image 513 into a pre-learned image segmentation model (530), segments an area to be manipulated from the 3D original image 513, determines an editing region based on the segmented area, and generates an editing region mask corresponding to the determined editing region.

Here, the present disclosure can induce a 3D editable image 523 to be positioned in the editing region of a 3D original image 513 by using an editing region mask.

In some cases, the present disclosure, when a user input designating a specific area of a 3D original image 513 is received, can segment a specific area designated by the user input from a 3D original image 513, determine an editing region based on the segmented area, and generate an editing region mask corresponding to the determined editing region.

Here, the present disclosure can induce a 3D editable image 523 to be positioned in the editing region of a 3D original image 513 by using an editing region mask.

In addition, the present disclosure can blend a 3D editable image 523 in an editing region by performing a manipulation including at least one of color change, density addition, and density removal in the editing region of a 3D original image 513.

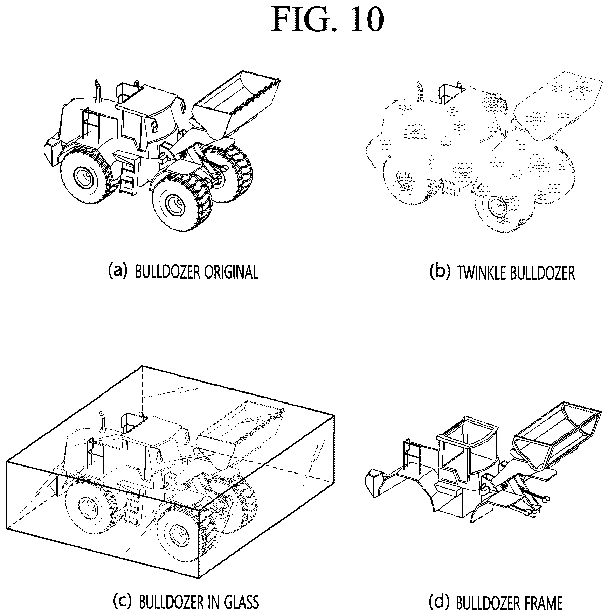

FIG. 10 is a view illustrating a 3D target image generated through various manipulation operations of a 3D object manipulation device according to an embodiment of the present disclosure.

As illustrated in FIG. 10, the present disclosure can generate 3D target images of various shapes through various manipulation actions.

In the case where the source object is a bulldozer, the present disclosure can generate a 3D original image including the bulldozer as the source object, as in FIG. 10(a), or can generate a 3D target image corresponding to the "twinkle bulldozer" by blending the 3D original image and the 3D editable image using the first rendering model and the second rendering model based on the source text "bulldozer" and the target text "twinkle bulldozer" as in FIG. 10(b).

In addition, as illustrated in Fig. 10(c), by blending the 3D original image and the 3D editable image using the first rendering model and the second rendering model based on the source text "bulldozer" and the target text "bulldozer in glass," a 3D target image corresponding to "bulldozer in glass" can be generated.

In addition, as illustrated in Fig. 10(d), by blending the 3D original image and the 3D editable image using the first rendering model and the second rendering model based on the source text "bulldozer" and the target text "bulldozer frame," a 3D target image corresponding to the "bulldozer frame" can be generated.

Here, the present disclosure, when a 3D target image is generated, can control to display manipulation information of an editing region around a 3D target image on a display screen.

For example, manipulation information of an editing region may include at least one of color change, density addition, and density removal, and may be displayed in various forms such as markers, text, and colors.

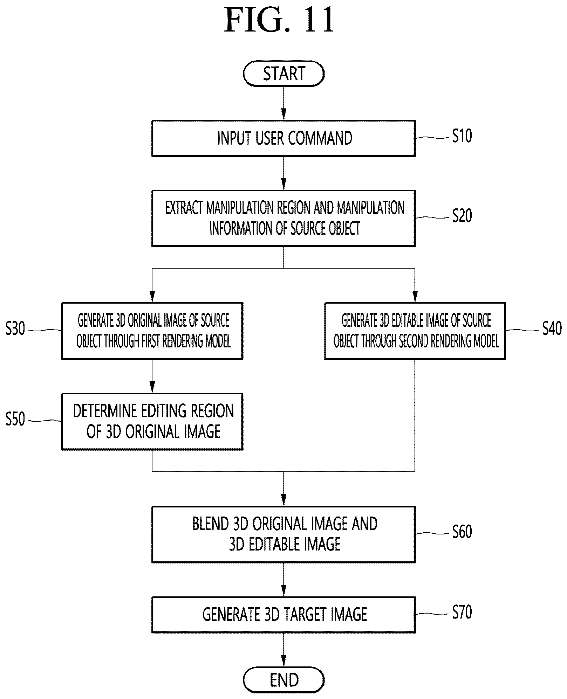

FIG. 11 is a view for explaining an operation process of a 3D object manipulation device according to an embodiment of the present disclosure.

As illustrated in FIG. 11, the present disclosure can receive a user command and a source object (S10).

Here, the user command may include at least one of a user prompt and a user voice.

In addition, the source object can be data including a 2D original image.

In some cases, the source object can be estimated from a user command, and a 2D original image corresponding to the estimated source object can be obtained from a pre-learned dataset.

Next, the present disclosure, when a user command and a source object are input, can extract the manipulation region and manipulation information of the source object from the user command (S20).

Here, the present disclosure, if the user command is a user prompt, can extract a source text corresponding to a manipulation region of a source object to be manipulated from a user prompt and a target text corresponding to manipulation information of the source object.

In some cases, the present disclosure, if the user command is a user voice, can convert a user voice into text, and extract a first text corresponding to a manipulation region of a source object to be manipulated and a second text corresponding to manipulation information of the source object from the converted text.

Next, the present disclosure can generate a 3D original image of a source object through a first rendering model (S30), and generate a 3D editable image of the source object based on manipulation information extracted through a second rendering model (S40).

Here, the present disclosure can input position information of a source object into a first rendering model to generate a 3D original image having a view direction corresponding to the position information, and can obtain the color and density of each pixel corresponding to the 3D original image.

In addition, the present disclosure inputs position information of a source object into a second rendering model to generate a 3D editable image having a view direction corresponding to the position information, obtains color, density, blending ratios of color, and blending ratio of density of each pixel corresponding to the 3D editable image, calculates a blending color of a 3D original image of the source object based on the blending ratio of color, and calculates a blending density of a 3D original image of the source object based on the blending ratio of density.

In some cases, the present disclosure may calculate the blending density of a 3D original image based on a pre-stored reference blending ratio or may calculate the blending density of a 3D original image based on a user blending ratio directly input by a user.

In addition, the present disclosure can determine an editing region of a 3D original image based on the extracted manipulation region (S50).

Here, the present disclosure inputs data related to the manipulation region of a source object and a 3D original image into a pre-learned image segmentation model to segment an area to be manipulated from the 3D original image, determines an editing region based on the segmented area, and generates an editing region mask corresponding to the determined editing region.

In some cases, the present disclosure, when a user input designating a specific region of a 3D original image is received, can segment a specific region designated by the user input from a 3D original image, determine an editing region based on the segmented region, and generate an editing region mask corresponding to the determined editing region.

In this way, the present disclosure can induce a 3D editable image to be positioned in the editing region of a 3D original image by using an editing region mask.

Next, the present disclosure can create a 3D target image (S70) by blending a 3D original image and a 3D editable image based on a determined editing region (S60).

Here, the present disclosure can generate a 3D target image by matching a 3D editable image to an editing region of a 3D original image and manipulating the editing region of the 3D original image of the source object based on a pre-obtained blending ratio.

At this time, the present disclosure may apply at least one of changing color, adding densities, and removing densities to an editing region of a 3D original image of a source object based on a pre-obtained blending ratio.

In this way, the present disclosure extracts the manipulation region and manipulation information of a 3D object based on natural language, thereby enabling easy partial manipulation of a 3D object without learning a large amount of data.

In addition, the present disclosure improves user convenience and enables partial manipulation of a 3D object by allowing the user to select a desired manipulation region from a 3D object through natural language input.

In addition, the present disclosure is efficient and economical because it enables manipulation of all or part of a pre-learned 3D object based on delayed words without directly learning the pre-learned 3D object, and therefore does not require a large learning data set.

The above-described present disclosure can be implemented as a computer-readable code on a medium in which a program is recorded. The computer-readable medium includes all kinds of recording devices in which data that can be read by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like. In addition, the computer may include a processor 180 of an artificial intelligence device.

[Industrial Applicability]

According to the 3D object manipulation device according to the present disclosure, the 3D object can be partially and easily manipulated without a large amount of data learning by extracting the manipulation region and manipulation information of the 3D object based on natural language, and therefore, the industrial applicability is remarkable.

**Claims**

1.  A 3D object manipulation device comprising:

    a memory storing a first rendering model and a second rendering model; and
    a processor manipulating a 3D object based on the first rendering model and the second rendering model,
    wherein the processor,
    when a user command and a source object are input, extracts a manipulation region and manipulation information of the source object from the user command, generates a 3D original image of the source object through the first rendering model, generates a 3D editable image of the source object based on the extracted manipulation information through the second rendering model, determines an editing region of the 3D original image based on the extracted manipulation region, and blends the 3D original image and the 3D editable image based on the determined editing region to generate a 3D target image.

2. The 3D object manipulation device of claim 1,

wherein the processor,
when extracting the manipulation region and manipulation information of the source object, if the user command is a user prompt, extracts a source text corresponding to the manipulation region of the source object to be manipulated and a target text corresponding to the manipulation information of the source object from the user prompt.

3. The 3D object manipulation device of claim 1,

wherein the processor,
when a source object including a 2D original image is input together with the user command, recognizes the source object from the 2D original image.

4. The 3D object manipulation device of claim 3,
wherein the manipulation region of the source object includes the entire area or a part of the 2D original image corresponding to the source object.

5. The 3D object manipulation device of claim 3,
wherein the manipulation information of the source object includes at least one of changing color, removing density, and adding density of a region to be manipulated among the 2D original image corresponding to the source object.

6. The 3D object manipulation device of claim 1,

wherein the processor,
when generating a 3D original image of the source object, inputs the position information of the source object into the first rendering model to generate a 3D original image having a view direction corresponding to the position information.

7. The 3D object manipulation device of claim 6,

wherein the processor,
when generating a 3D original image of the source object, obtains the color and density of each pixel corresponding to the 3D original image.

8. The 3D object manipulation device of claim 1,

wherein the processor,
when generating a 3D editable image of the source object, inputs the position information of the source object into the second rendering model to generate a 3D editable image having a view direction corresponding to the position information.

9. The 3D object manipulation device of claim 8,

wherein the processor,
when generating a 3D editable image of the source object, obtains the color, density, blending ratios of the color, and the blending ratio of the density of each pixel corresponding to the 3D editable image, calculates the blending color of the 3D original image of the source object based on the blending ratio of the color, and calculates the blending density of the 3D original image of the source object based on the blending ratio of the density.

10. The 3D object manipulation device of claim 1,

wherein the processor,

when determining the editing region of the 3D original image, inputs the manipulation region-related data of the source object and the 3D original image into a pre-learned image segmentation model to segment the area to be manipulated from the 3D original image, determines the editing region based on the segmented area, and generates an editing region mask corresponding to the determined editing region.

11. The 3D object manipulation device of claim 1,

wherein the processor,
when generating the 3D target image, matches the 3D editable image to the edit area of the 3D original image, and manipulates the edit area of the 3D original image of the source object based on the pre-obtained blending ratio to generate the 3D target image.

12. The 3D object manipulation device of claim 11,

wherein the processor,
when manipulating the editing region of the 3D original image of the source object, at least one of changing color, adding densities, and removing densities is applied to the editing region of the 3D original image of the source object based on the previously obtained blending ratio.

13. The 3D object manipulation device of claim 1,

wherein the processor,
when generating the 3D target image, generates the 3D target image based on a formula consisting of $L_{total}=L_{clip}+\lambda_1 L_{region}+\lambda_2 L_{opacity}+\lambda_3 L_{reg}$ (wherein, $\lambda_1,\lambda_2,\lambda_3$ are hyperparameters for loss balance, $L_{tota}$ is the total loss of the 3D target image whose editing region is manipulated, $L_{tota}$ is the loss of the 3D target image whose editing region is manipulated according to the desired text, $L_{region}$ is the loss of the 3D target image whose editing region is manipulated according to the desired area, and $L_{opacity}$ and $L_{reg}$ are the losses of the 3D target image whose editing region is manipulated according to the desired ratio).

14. The 3D object manipulation device of claim 1,

wherein the processor,
when generating the 3D target image, performs an operation including at least one of changing color, adding densities, and removing densities in the editing region of the 3D original image to blend the 3D editable image in the editing region.

15. A method for manipulating a 3D object, comprising:

receiving a user command and a source object;
extracting a manipulation region and manipulation information of the source object from the user command when the user command and the source object are input;
generating a 3D original image of the source object through a first rendering model, and generating a 3D editable image of the source object based on the extracted manipulation information through a second rendering model;
determining an editing region of the 3D original image based on the extracted manipulation region; and
generating a 3D target image by blending the 3D original image and the 3D editable image based on the determined editing region.

EP 4 654 149 A1

FIG. 1

<u>100</u>

180

110 — COMMUNICATION PART ⟷ PROCESSOR ⟷ MEMORY — 170

120 — INPUT PART ⟷ PROCESSOR ⟷ OUTPUT PART — 150

130 — LEARNING PROCESSOR ⟷ PROCESSOR ⟷ SENSING PART — 140

# FIG. 2

# FIG. 3

1

100e

Home
Appliance

200 — AI Server

Smartphone —100d

10

Cloud Network
(5G)

100a — Robot

XR device —100c

Self-Driving
Vehicle

100b

# FIG. 4

100

AI

MEMORY — 170

MANIPULATION MODEL

TEXT →

SOURCE OBJECT →

PROCESSOR — 180

→ GENERATE PARTIALLY MANIPULATED TARGET OBJECT

# FIG. 5

520

$g_\emptyset$

COLOR & DENSITY 521

$\sigma^e, \beta^\sigma$
$c^e, \beta^c$

BLENDING RATIO

POSITION
$\gamma(x)$

VIEW DIRECTION $\gamma(d)$

$f_\theta$

510

COLOR & DENSITY 511

$\sigma^o$
$c^o$

# FIG. 6

# FIG. 7

COLOR & DENSITY

$\sigma^e, \beta^\sigma$
$c^e, \beta^c$

BLENDING RATIO

$g_\phi$

POSITION $\gamma(x)$

VIEW DIRECTION $\gamma(d)$

$f_\theta$

COLOR & DENSITY

$\sigma^o$
$c^o$

520
523
521
$I^e$
525
522
513
511
$I^o$
510

EP 4 654 149 A1

# FIG. 8

# FIG. 9

# FIG. 10

(a) BULLDOZER ORIGINAL

(b) TWINKLE BULLDOZER

(c) BULLDOZER IN GLASS

(d) BULLDOZER FRAME

# FIG. 11

```
                    ( START )
                        |
                        v
            +---------------------------+
            |   INPUT USER COMMAND      |——— S10
            +---------------------------+
                        |
                        v
        +-----------------------------------+
        | EXTRACT MANIPULATION REGION AND   |——— S20
        |   MANIPULATION INFORMATION        |
        |        OF SOURCE OBJECT           |
        +-----------------------------------+
                |                   |
                v                   v
  +----------------------+  +----------------------+
  | GENERATE 3D ORIGINAL |  | GENERATE 3D EDITABLE |
S30—|IMAGE OF SOURCE OBJECT|  | IMAGE OF SOURCE OBJECT|——S40
  |THROUGH FIRST RENDERING|  |THROUGH SECOND RENDERING|
  |       MODEL          |  |        MODEL         |
  +----------------------+  +----------------------+
                |                   |
                v                   |
  +----------------------+          |
  |DETERMINE EDITING REGION|        |
S50—| OF 3D ORIGINAL IMAGE |        |
  +----------------------+          |
                |                   |
                +--------+----------+
                         v
            +---------------------------+
            | BLEND 3D ORIGINAL IMAGE   |——— S60
            |   AND 3D EDITABLE IMAGE   |
            +---------------------------+
                        |
                        v
            +---------------------------+
            |  GENERATE 3D TARGET IMAGE |——— S70
            +---------------------------+
                        |
                        v
                    ( END )
```

EP 4 654 149 A1

## INTERNATIONAL SEARCH REPORT

| International application No. |
|---|
| **PCT/KR2024/002739** |

| A. | CLASSIFICATION OF SUBJECT MATTER |
|---|---|

**G06T 19/20**(2011.01)i; **G06T 15/04**(2011.01)i; **G06T 15/06**(2011.01)i; **G06T 7/49**(2017.01)i; **G06F 40/10**(2020.01)i; **G06T 17/00**(2006.01)i

According to International Patent Classification (IPC) or to both national classification and IPC

| B. | FIELDS SEARCHED |
|---|---|

Minimum documentation searched (classification system followed by classification symbols)

G06T 19/20(2011.01); G02B 27/00(2006.01); G06T 15/20(2011.01); G06T 17/20(2006.01); G06T 5/50(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사용자 프롬프트(user prompt), 렌더링 모델(rendering model), 3차원 원본이미지 (3D original image), 3차원 편집이미지(3D editable image), 블렌딩(blending), 3차원 타겟 이미지(3D target image), 신경 방사 필드(Neural Radiance Fields, NeRF)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022-182369 A1 (LEIA INC.) 01 September 2022 (2022-09-01)<br>See paragraphs [0016], [0031] and [0037]; and claims 9 and 11. | 1-15 |
| A | YUAN, Yu-Jie et al. NeRF-Editing: Geometry Editing of Neural Radiance Fields. 2022 IEEE/CVF Conference on Computer Vision and Pattern Recognition (CVPR). pp. 18332-18343, 18-24 June 2022.<br>See pages 18332-18343. | 1-15 |
| A | KIM, Hyunsu et al. 3D-aware Blending with Generative NeRFs. arXiv:2302.06608v1. pp.1-23, 13 February 2023.<br>See pages 1-23. | 1-15 |
| A | KR 10-2022-0135072 A (ELECTRONICS AND TELECOMMUNICATIONS RESEARCH INSTITUTE) 06 October 2022 (2022-10-06)<br>See paragraphs [0005]-[0006]. | 1-15 |
| A | KR 10-2047031 B1 (GOOGLE LLC) 20 November 2019 (2019-11-20)<br>See paragraphs [0004]-[0005]. | 1-15 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 June 2024** | **10 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/002739**

| Patent document cited in search report | | | Publication date (day/month/year) | Patent family member(s) | | | Publication date (day/month/year) |
|---|---|---|---|---|---|---|---|
| WO | 2022-182369 | A1 | 01 September 2022 | CN | 116917946 | A | 20 October 2023 |
| | | | | EP | 4298606 | A1 | 03 January 2024 |
| | | | | JP | 2024-508457 | A | 27 February 2024 |
| | | | | KR | 10-2023-0135660 | A | 25 September 2023 |
| | | | | US | 2023-0394740 | A1 | 07 December 2023 |
| KR | 10-2022-0135072 | A | 06 October 2022 | None | | | |
| KR | 10-2047031 | B1 | 20 November 2019 | CN | 107438866 | A | 05 December 2017 |
| | | | | CN | 107438866 | B | 01 December 2020 |
| | | | | EP | 3295368 | A1 | 21 March 2018 |
| | | | | JP | 2018-514031 | A | 31 May 2018 |
| | | | | JP | 6663926 | B2 | 13 March 2020 |
| | | | | KR | 10-2017-0120639 | A | 31 October 2017 |
| | | | | US | 2016-0335795 | A1 | 17 November 2016 |
| | | | | US | 9916679 | B2 | 13 March 2018 |
| | | | | WO | 2016-183464 | A1 | 17 November 2016 |

Form PCT/ISA/210 (patent family annex) (July 2022)